# EUROPEAN PATENT APPLICATION

(11) **EP 4 248 735 A1**
(43) Date of publication of application: **27.09.2023**
(21) Application number: 22462001.3
(22) Date of filing: 23.03.2022
(51) Int. Cl.: A01G 31/02

(54) **MODULAR AQUAPONIC PLANT GROWING APPARATUS**

(71) Applicant: GS-Pipe Mérnöki, Kereskedelmi És Szolgáltató Kft., 2045 Törökbálint (HU)
(72) Inventor: Fehér, Milán, H-4028 Debrecen (HU); Stündl, László, H-4032 Debrecen (HU)
(74) Representative: Danubia Patent & Law Office LLC

(57) **Abstract**

The modular aquaponic plant growing apparatus (100) comprises a plurality of horizontal plant growing pipes (110), each having an inlet opening at its upper end (112) and an outlet opening at its lower end, wherein said plant growing pipes (110) slope slightly from the upper end to the lower end, and wherein a plurality of holes (122) are formed at predetermined intervals on the upper side (120) of the plant growing pipes (110), and the lower ends of the plant growing pipes have terminal fittings having an angle of 90° to control the level of water flowing in the plant growing pipes (110); a plurality of net cups (130) with bottom apertures, said net cups being arranged in the holes (120) of the plant growing pipes (110) and at least partially filled with expanded clay aggregate pellets to support the roots and stems of the plants to be grown; a common collecting pipe arranged below the outlet of the plant growing pipes (110) and having inlets on the upper side thereof; a buffer container connected to the collecting pipe (140); a pump arranged in the buffer container; a network of supply pipe connected to the pump, the supply pipes of which are connected to the plant growing pipes (110) at their upper end; and a framework (180) arranged on the ground for holding the plant growing pipes (110), the buffer container and the network of supply pipes.

## Description

The present invention relates to a modular aquaponic plant growing apparatus.

Intensive fish production systems that allow concentrated fish meat production are gaining ground in the supply of fish products to the population, making them less competitive with other food-producing sectors in terms of environmental resources. At the same time, the environmental impact of available technologies can be further reduced by utilizing by-products generated during operation. Using aquaponic systems based on the effluent of intensive fish production, valuable food and spice plants can be produced that greatly contribute to the diversification of production and increase sustainability. Aquaponics is a combination of fish production and soil-free crop production, consisting of an aquaculture and a hydroponic unit (see Somerville et al., "Small-Scale Aquaponic Food Production: Integrated Fish and Plant Farming", FAO Fisheries and Aquaculture Technical Paper 2014, I*.*)

In the recent years, the focus of research and development activities has been on the so-called separated aquaponic systems in which it is possible to create optimal conditions for both fish and plants (see Goddek et at., "Navigating towards decoupled aquaponic systems: A system dynamics design approach", Water 2016, 8, 303)*.* The biological and technical bases of the technology presented in this study are well known to the person skilled in the art, however, little practical experience is available so far regarding the nutrient transformation conditions of the system, the available fish and plant yields, and the operation. Although various systems suitable for aquaponic crop production are available on the market, there is a need to implement complex technologies that can be designed and operated simply and at low cost.

It is an object of the present invention to provide a modular aquaponic plant growing apparatus which is suitable for the simultaneous utilization of by-products of fish production and the efficient treatment of effluent, as well as for the production of large quantities of plant biomass. It is a further object of the present invention to provide a modular system of aquaponic plant growing apparatus that provides biological and technological flexibility and simply allows the system to be expanded.

The above objects are achieved by providing a modular aquaponic plant growing apparatus which comprises:
- a plurality of horizontal plant growing pipes, each having an inlet at its upper end and an outlet at its lower end, the pipes sloping slightly from the upper end to the lower end, and wherein a plurality of holes are formed at predetermined intervals in the upper side of the plant growing pipes, and wherein the lower ends of the plant growing pipes have terminal fittings having an angle of 90° to control the level of water flowing in the plant growing pipes;
- a plurality of net cups with bottom apertures, said net cups being arranged in the holes of the plant growing pipes, said net cups being at least partially filled with expanded clay aggregate pellets to support the roots and stems of the plants to be grown,
- a common collecting pipe arranged below the outlet of the plant growing pipes, with inlets on their upper sides,
- a buffer container connected to the collecting pipes,
- a pump arranged in the buffer container,
- a network of supply pipes connected to the pump, the supply pipes being connected to the plant growing pipes at their upper end, and
- a framework arranged on the ground for holding the plant growing pipes, the buffer container, and the network of supply pipes.

The invention will now be described in more detail with reference to the accompanying drawings. In the drawings:
- Figure 1 illustrates the design and arrangement of the plant growing pipes in an apparatus according to an exemplary embodiment;
- Figure 2 illustrates the lower end of the plant growing pipes and the elements arranged there, in an exemplary embodiment of the apparatus according to the invention; and
- Figure 3 illustrates the upper end of the plant growing pipes and the elements arranged there, in an exemplary embodiment of the apparatus according to the invention.

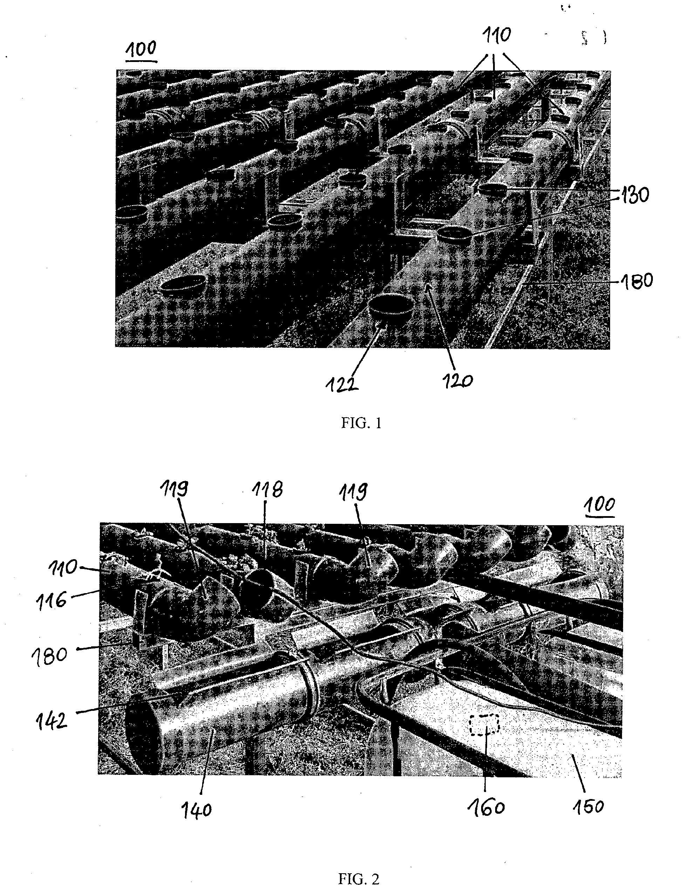

As shown in Figure 1, the modular aquaponic plant growing apparatus 100 according to the invention comprises a plurality of horizontal plant growing pipes 110. Each of the plant growing pipes 110 has an upper end 112 with an inlet 114 and a lower end 116 with an outlet 118. Used water originating from a fish farm is fed into the inlet 114 of the plant growing pipes 110. The plant growing pipes 110 slope slightly from their upper end 112 to their lower end 116 so that the feed water flows through the plant growing pipes 110 by gravity.

On the upper side of the plant growing pipes 110, a plurality of holes are formed at predetermined intervals, into which net cups 130 are inserted so that the lower portion of the net cups 130 extends into the interior of the plant growing pipes 110.

The plant growing pipes 110 may be, for example, PVC tubes of 110 mm diameter having holes 122 at an interval of, for example, 25 cm for the net cups 130 having a diameter of, for example, 5.5 cm. In the lower part of the net cups 130, apertures are formed for the roots of the plants to be grown in the net cups 130, so that the roots of the plants can penetrate the wall of the net cups 130 into the interior of the plant growing pipes 110. The net cups 130 are preferably made of plastic. Preferably, horticultural swollen granules (e.g. LIAFLOR, 8-16 mm) are placed in the net cups 130 to support the roots and stems of the plants.

As shown in Figure 2, the lower end 116 of the plant growing pipes 110 has terminal fittings 119 having an angle of 90° to control the level of water flowing in the pipes. The water level in the plant growing pipes 110 can be controlled by rotating the terminal fitting 119.

The water flowing out of the plant growing pipes 110 is led through the terminal fitting 119 to a common collecting pipe 140 with inlets 142 on its upper side, which leads the collected water by gravity to a buffer container 150. The collecting pipe 140 is preferably a PVC pipe having a diameter of 160 mm. Preferably, the buffer container 150 has a volume of approx. 1000 liters.

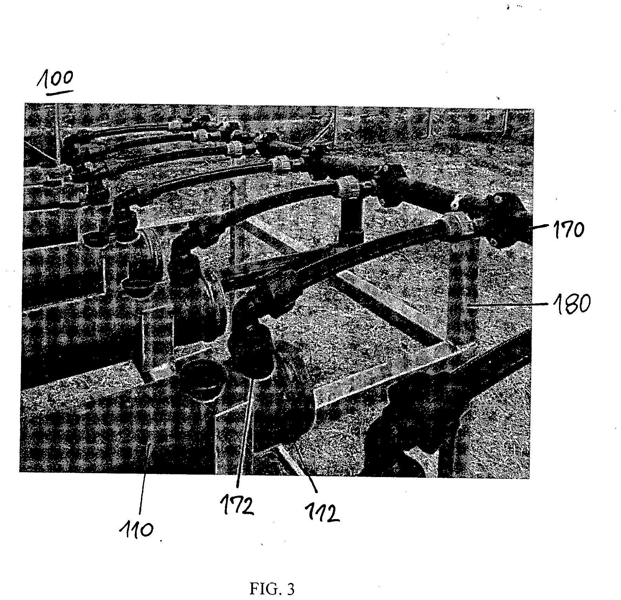

A pump 160 is located in the buffer container 150 to return water through a network of supply pipes 170 to the plant growing pipes 110 at their upper end 112, as shown in Figure 3. The pump 160 may be, for example, a PondoMax ECO 8000 pond pump from PONTEC (power: 70 W; max. water delivery: 8,000 liter/h; max. lift height: 2.8 m). The even distribution of the water returned through the network of supply pipes 170 between the plant growing pipes 110 is preferably provided by means of KPE taps 172.

The plant growing pipes 110, the buffer reservoir 150, and the network of supply pipes 170 are supported by a framework 180 arranged on the ground. The extremely stable and robust framework 180 is preferably assembled from closed section beams. The framework 180 is provided with claws according to the diameter of the plant growing pipes 110, e.g. at intervals of 110 mm, to prevent displacement and deformation of the plant growing pipes 110. The framework 180 is preferably provided with a coating (paint) resistant to environmental damage.

The aquaponic plant growing apparatus according to the invention is primarily suitable for growing basil (*Ocimum basilicum*)*,* different varieties of chili peppers (*Capsicum sp.*) and medicinal watercress (*Nasturtium officinale*)*.*

The operation of the apparatus according to the invention is described below with reference to Figures 1 to 3.

Aquaponics technology is a soil-free, combined production process that produces plant biomass in an artificial, recirculating ecosystem using nutrients and heat from the effluent of a fish production system. The basic principle of the operation of aquaponic systems is that the metabolic products produced by fish (nitrogen and phosphorus forms, other macroelements and microelements) are removed by plants planted in the plant growing unit of the system, thus filtering the effluent and producing valuable plant biomass as a by-product. In the case of classical aquaponics, the flow of water and material between the fish farming and the plant breeding units is continuous, the water originating from the fish farming is recirculated from the plant breeding pipes and pools to the fish farming, similar to the operation of a biological filter.

In so-called decoupled aquaponic systems, the water originating from the plant growing unit is not recirculated to the fish farming pools, but the organic matter content of the water is passivated by filtration through the root zone or significantly reduced in space volume and mass as a result of plant evaporation. The one-way transport of the water and the material makes it possible to carry out plant protection and plant care interventions, thus the decoupled aquaponic technologies ensure the conditions for high-intensity plant production.

The modular aquaponic plant growing apparatus 100 of the present invention operates on the principle of the so-called NFT (*Nutrient Film Technology*)*.* The technology is based on the use of horizontal plant growing pipes 110 as the plant growing unit, in which the nutrient-rich water flowing out of the fish production system flows in a thin layer by gravity. The optimum water flow rate is 1-2 liters/minute, and a slope of 1 centimeter per meter is required for the plant growing pipes 110. One of the advantages of this design is that the evaporation loss during the production is minimal, as the water flows in a closed space (in pipes). The roots of the plants are formed in the piping system, at the bottom of which it absorbs the nutrients needed for growth from a few centimeters of water layer. As part of the root system develops above the water layer inside the plant growing pipes 110, the root zone receives the necessary amount of oxygen. The stems and foliage of the plants grow in the plastic pots and the net cups 120 inserted in the plant growing pipes 110 so that the plant biomass can be continuously cared for and harvested.

The modular aquaponic plant growing apparatus according to the invention has the following advantageous properties. In contrast to the complex aquaponic technologies available on the market, the apparatus according to the invention has low investment and operating costs, and its operation is simple and does not require any special expertise. The equipment has a modular design, so it can be expanded or multiplied based on the quantitative and qualitative parameters of the effluent from the fish farming system.

The apparatus according to the invention may be used for the cultivation of different plant species and plant varieties depending on the development of environmental factors critical to plant production (e.g. temperature, light conditions, etc.). When connected to a fish farm, it can reduce the environmental impact of the intensive fish production.

## Claims

1. A modular aquaponic plant growing apparatus (100), **characterized in that** it comprises:
- a plurality of horizontal plant growing pipes (110), each having an inlet opening (114) at its upper end (112) and an outlet opening (118) at its lower end (116), wherein said plant growing pipes (110) slope slightly from the upper end (112) to the lower end (116), and wherein a plurality of holes (122) are formed at predetermined intervals on the upper side (120) of the plant growing pipes (110), and the lower ends (116) of the plant growing pipes (110) have terminal fittings (119) having an angle of 90° to control the level of water flowing in the plant growing pipes (110);
- a plurality of net cups (130) with bottom apertures, said net cups being arranged in the holes (120) of the plant growing pipes (110) and at least partially filled with expanded clay aggregate pellets to support the roots and stems of the plants to be grown,
- a common collecting pipe (140) arranged below the outlet (118) of the plant growing pipes (110) and having inlets (142) on the upper side thereof,
- a buffer container (150) connected to the collecting pipe (140),
- a pump (160) arranged in the buffer container (150),
- a network of supply pipes (170) connected to the pump (160), the supply pipes of which are connected to the plant growing pipes (110) at their upper end (112), and
- a framework (180) arranged on the ground for holding the plant growing pipes (110), the buffer container (150) and the network of supply pipes (170).

2. The apparatus according to claim 1, **characterized in that** the pipes of the network of pipes (170) are connected to the plant growing pipes (110) via KPE taps (172) in order to distribute the recirculated water evenly.

3. The apparatus according to claim 1, **characterized in that** the framework (180) is provided with claws at intervals corresponding to the diameter of the plant growing pipes (110) for preventing the plant growing pipes (110) from moving and deforming.
